# EUROPEAN PATENT SPECIFICATION

(11) **EP 4 077 573 B1**
(45) Date of publication and mention of the grant of the patent: **30.07.2025**
(21) Application number: 20838609.4
(22) Date of filing: 11.12.2020
(51) Int. Cl.: C09J 163/00

(54) **TWO-PART CURABLE ADHESIVE**
ZWEITEILIGER HÄRTBARER KLEBSTOFF
ADHÉSIF DURCISSABLE À DEUX CONSTITUANTS

(30) Priority: 16.12.2019 US 201962948474 P
(43) Date of publication of application: 26.10.2022
(73) Proprietor: 3M Innovative Properties Company, Saint Paul, Minnesota 55133-3427 (US)
(72) Inventor: CHEN, Lianzhou, Saint Paul, Minnesota 55133-3427 (US)
(74) Representative: Mathys & Squire
(86) International application number: PCT/IB2020/061834
(87) International publication number: WO 2021/124051

(56) References cited:
- WO-A1-2016/137671
- WO-A1-2019/005800
- US-A1- 2009 099 312

## Description

### Field of the Invention

Provided is a curable two-part paste adhesive for structural bonding applications. Such adhesives can be useful in bonding, for example, automotive and aerospace structures.

### Background

Over time, structural adhesives have come to replace or augment use of welds and mechanical fasteners such as screws and rivets. This transition is especially prominent in the automotive and aerospace industry, where corrosion resistance is at issue, and where bonding to softer composite and plastic substrates has become increasingly common. Depending on the application, these adhesives may need to show both high peel and shear strength, and the ability to withstand extreme environments.

Epoxy adhesives are known to provide acceptable bond strengths in challenging outdoor environments, making them well suited for these critical applications. Epoxy adhesives are typically formulated with two parts, a base component and a curative component, that react with each other when mixed to form a solid polymeric material. These parts are stored separately, enabling the adhesive to have a long shelf life even when stored at room temperature.

Conveniently, the two adhesive parts can be provided in a dual-chambered cartridge and loaded into a suitable dispenser to mix and apply the reactive mixture. For larger scale operations, these can be provided in bulk quantities and pumped into an inline mixer and dispenser at the point of use. For convenience, and to reduce costs associated with adhesive bonding, it is preferable for facile curing of the adhesive to occur at ambient temperatures.

WO2019/005800A1 discloses curable two-part compositions useful for structural bonding applications including bonding polymeric and metal substrates in aerospace application.

### Summary

The provided two-part adhesive compositions address a shortcoming of existing high temperature structural adhesives. Known two-part adhesives that are mixed and cured at ambient temperature can be prepared from a blend of epoxy resins and a curative that contains a reactive amine compound. To enhance the high temperature performance of the adhesive, multifunctional epoxy resins can be used to increase the crosslink density. Unfortunately, high crosslinking density tends to increase brittleness in the cured epoxy resin, which in turn degrades peel performance.

To compensate for the degradation of peel performance, manufacturers have incorporated flexibilizers and tougheners into the formulation. This, however, has an undesirable effect of impairing the shear strength of the adhesive at high temperatures. Because of this dilemma, epoxy adhesives that are capable of handling high temperatures tend to display poor peel performance and those that display acceptable toughness and peel performance tend to show poor shear strength at high temperatures.

Provided herein are two-part curable adhesives that high temperature shear strength and high peel performance can be simultaneously achieved by including two different toughening oligomers which are not compatible with each other into separate parts of the adhesive. In the mixed composition, use of the two different oligomers can help form rubbery domains that phase separate on a microscopic scale. The gelling process of the adhesive can prevent the macrophase separation of the adhesive, as viscosity increases rapidly while the adhesive is curing.

When cured, the provided adhesive is capable of displaying overlap shear strength of over 5 MPa at 177°C along with, surprisingly, a floating roller peel strength of over 75 N/25 mm (measured at ambient temperature).

In one aspect, a two-part curable adhesive is provided. The two-part curable adhesive comprises: a first part comprising an epoxy resin and a first oligomeric toughener; and a second part comprising a curative that is reactive with the epoxy resin at ambient conditions and a second oligomeric toughener, wherein the first oligomeric toughener comprises either an epoxy-terminated butadiene-acrylonitrile oligomer or a polyetheramine-epoxy adduct, the second oligomeric toughener comprises polytetrahydrofuranamine, and wherein the first and second oligomeric tougheners are immiscible with each other at ambient conditions, and further wherein the two-part curable adhesive cures at ambient temperature when the first part and second part are mixed with each other.

In a second aspect, a method of bonding is provided, comprising: mixing the first and second parts of the two-part curable adhesive to provide a mixture, wherein the first and second oligomeric tougheners form a multiplicity of heterogeneous domains within the mixture; disposing the mixture onto at least one substrate to be bonded; and securing the at least one substrate until the two-part curable adhesive has functionally cured.

### DEFINITIONS

As used herein:
"ambient conditions" means at a temperature of 23°C and a pressure of 1 atmosphere (i.e., 101.3 kPa);
"ambient temperature" refers to a temperature of 23°C;
"average" refers to a number average, unless otherwise specified;
"cure" refers to chemically crosslinking, such as by exposing to radiation in any form, heating, or allowing to undergo a chemical reaction that results in hardening or an increase in viscosity (e.g., under room temperature or heated conditions);
"functionally cure" means, for an adhesive, to achieve a state of cure where an effective adhesive bond has been obtained;
"macroscopic phase separation" means a state in which at least two distinct compositional domains are visible with the naked eye;
"oligomeric" means a polymer having relatively few (e.g., in some instances, from 2 to 20, 2 to 50, 2 to 100, 2 to 200, or 2 to 500) repeating units;
"polymeric" refers to a molecule having a plurality of repeating units; and
"toughener" refers to an additive that enhances the toughness of a material to which it is added.

### Detailed Description

As used herein, the terms "preferred" and "preferably" refer to embodiments described herein that can afford certain benefits, under certain circumstances. However, other embodiments may also be preferred, under the same or other circumstances. Furthermore, recitation of one or more preferred embodiments does not imply that other embodiments are not useful and is not intended to exclude other embodiments from the scope of the invention.

As used herein and in the appended claims, the singular forms "a," "an," and "the" include plural referents unless the context clearly dictates otherwise. Thus, for example, reference to "a" or "the" component may include one or more of the components and equivalents thereof known to those skilled in the art. Further, the term "and/or" means one or all of the listed elements or a combination of any two or more of the listed elements.

It is noted that the term "comprises" and variations thereof do not have a limiting meaning where these terms appear in the accompanying description. Moreover, "a," "an," "the," "at least one," and "one or more" are used interchangeably herein.

Reference throughout this specification to "one embodiment," "certain embodiments," "one or more embodiments" or "an embodiment" means that a particular feature, structure, material, or characteristic described in connection with the embodiment is included in at least one embodiment of the invention. Thus, the appearances of the phrases such as "in one or more embodiments," "in certain embodiments," "in one embodiment" or "in an embodiment" in various places throughout this specification are not necessarily referring to the same embodiment of the invention. Where applicable, trade designations are set out in all uppercase letters.

Provided herein are two-part adhesives suitable for bonding structural components. Such components can include, in some embodiments, primary and secondary structures in a wide variety of industrial applications. These bonding applications may entail joining of similar or dissimilar materials, as might be encountered in composite bonding, metal bonding, and metal to composite bonding in automotive or aerospace vehicles. In preferred embodiments, these cured adhesives provide a structural bond that can retain its integrity under extreme conditions, including hot and wet environments.

Advantageously, these two-part adhesives can be mixed and cured at ambient temperature. The process of curing is not instantaneous, but happens gradually so that an operator has sufficient working time to apply and shape the adhesive, as needed. This working time can be used for positioning structures to be bonded and adjusting for fit prior to setting.

The provided two-part adhesives are epoxy adhesives. The epoxy adhesives are formulated with two reactive components, commonly called the base part and curative part. Further detail for each of these parts are provided in the sections below.

### Base part

The base part of the two-part curable adhesive contains at least one epoxy resin, and often a miscible blend or two or more epoxy resins.

Epoxy resins are compounds having one or more epoxide groups. These compounds can be polymers whose repeat units derive from monomers having an epoxy-functionality. Epoxy resins also include silicone-based polymers containing epoxy groups or organic polymer particles coated with or modified with epoxy groups or particles coated with, dispersed in, or modified with epoxy-groups-containing polymers.

The epoxide groups allow the resin to undertake crosslinking reactions. The epoxy resins generally have an average epoxide-functionality of at least 1, at least 1.5, at least 2, at least 2.5, or at least 3. Epoxy resins that have a functionality significantly greater than 2 are capable of inducing crosslinking, and these multifunctional epoxy resins can be used to control crosslink density and critical adhesive properties upon curing.

Multifunctional epoxy resins having at least three functional groups such as a trifunctional epoxy resin can be a single polymer or can be a combination of two or more types of polymers. Examples of multifunctional epoxy resins include glycidyl amine type epoxy resins, and glycidyl phenol type epoxy resins. Examples of glycidyl amine type epoxy resins include triglycidyl aminophenol epoxy compounds and triglycidyl aminocresol epoxy compounds. Examples of glycidyl phenol type epoxy resins include phenol novolac epoxy compounds and triphenyl methane triglycidyl ether compounds.

Epoxy resins which may be employed as multifunctional epoxy resins as described herein are commercially available under the trade designations TACTIX and ARALDITE from Huntsman Corporation, The Woodlands, TX.

Epoxy resins may be aromatic, aliphatic, cycloaliphatic or mixtures thereof. Epoxy resins for use herein can be aliphatic or aromatic. Preferred epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. Dihydric phenols contain two hydroxy groups bonded to the aromatic ring of a phenol, and polyphenols contain at least two hydroxy groups are bonded to the aromatic ring.

Useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1'-dinaphthylmethane, and the 2,2', 2,3', 2,4', 3,3', 3,4', and 4,4' isomers of dihydroxydiphenylmethane, dihydroxydiphenyldimethylmethane, dihydroxydiphenylethylmethylmethane, dihydroxydiphenylmethylpropylmethane, dihydroxydiphenylethylphenyl-methane, dihydroxydiphenylpropylenphenylmethane , dihydroxydiphenylbutylphenyl-methane, dihydroxydiphenyltolylethane, dihydroxydiphenyltolylmethylmethane, dihydroxydiphenyldicyclohexylmethane, and dihydroxydiphenylcyclohexane.

A suitable blend of epoxy resins can include epoxy resins containing or consisting of glycidyl ethers or polyglycidyl ethers of dihydric or polyhydric phenols, such as bisphenol A, bisphenol F and combinations thereof. These epoxy resins can contain one or more repeating units derived from bisphenol A and/or F. Such ethers, or such repeating units are obtainable, for example, by a polymerization of glycidyl ethers of bisphenol A and/or F with epichlorohydrin.

Instead of, or in addition to, using the aromatic epoxy resins described above, their corresponding cycloaliphatic compounds may be used. For example, cyclic or acyclic, linear or branched, epoxy resins may be used instead of, or in addition to, the aforementioned aromatic epoxy resins. Blends of two or more epoxy resins are also possible and might be contemplated to optimize adhesive properties by one skilled in the art.

Commercially-available examples of useful epoxy resins include diglycidylether of bisphenol A (available under the trade designation EPON 828, EPON 830, EPON 1001 or EPIKOTE 828 from Hexion Specialty Chemicals GmbH, Rosbach, Germany, or under the trade designation D.E.R-331 or D.E.R-332 from Dow Chemical Co,); diglycidyl ether of bisphenol F (e.g., EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g., EPIKOTE 232 available from Hexion Specialty Chemicals GmbH, Rosbach, Germany).

In addition to the epoxy resin or epoxy resin blend, the base part of the two-part curable adhesive further includes a first oligomeric toughener. In preferred embodiments, the oligomeric toughener is compatible with (i.e., miscible with) the epoxy resin or epoxy resin blend, such that the base part is macroscopically homogenous.

The first oligomeric toughener can be reactive with at least one other component in the two-part curable composition. In some embodiments, the first oligomeric toughener in the base part can directly react with a curative in the curative part when the base and curative parts are mixed at ambient temperature.

As an alternative, the first oligomeric toughener can be reactive with at least one epoxy resin in the base part to produce a reactive epoxy adduct. The epoxy adduct can then subsequently react with a curative in the curative part when the base and curative parts are mixed at ambient temperature.

The first oligomeric toughener can have any suitable molecular weight. The first oligomeric toughener can have a number average molecular weight of from 500 g/mol to 15,000 g/mol; from 1000 g/mol to 10,000 g/mol; from 1500 g/mol to 10,000 g/mol; or in some embodiments, less than, equal to, or greater than 500 g/mol; 600; 700; 800; 900; 1000; 1200; 1500; 1700; 2000; 2500; 3000; 3500; 4000; 4500; 5000; 6000; 7000; 8000; 9000; 10,000; 11,000; 12,000; 13,000; 14,000; or 15,000 g/mol.

A first option for the first oligomeric toughener is an adduct of a polyetheramine and at least one epoxy resin present in the epoxy part of the two-part curable composition. Useful polyetheramines include di-functional, tri-functional, and other multifunctional polytetrahydrofuranamines, which can have number average molecular weights within the ranges enumerated above. The polyetheramines may be linear or branched. Branched polyetheramines can have an amine functionality of 3, 4, 5, or even greater. Selection of polyetheramines can be influenced by the desired crosslink density, hardness, flexibility, and degree of moisture uptake.

Grades of polytetrahydrofuranamine, can have different degrees of functionality and molecular weight, are commercially available as curing agents from various manufacturers, including BASF SE, Ludwigshafen, Germany.

Another option for the first oligomeric toughener is an epoxy-terminated butadiene-acrylonitrile oligomer. The epoxy-terminated butadiene-acrylonitrile oligomer can be an adduct of diglycidyl ether of bisphenol A and carboxylic acid terminated butadiene-acrylonitrile (CTBN) oligomer. Various carboxylic acid terminated butadiene-acrylonitrile reactive liquid oligomers can be provided under the trade designation HYPRO by Emerald Kalama Chemical, LLC, Vancouver, WA.

Proper selection of the acrylonitrile content in the butadiene-acrylonitrile oligomer allows the oligomer to be fully miscible in the epoxy resin blend. When the resin system cures, the epoxy-functionality reacts into the matrix resin, and the synthetic butadiene-acrylonitrile rubber phase separates to form discrete rubber domains. These domains are on the size scale of nanometers to micrometers, and can absorb strain energy to toughen the cured adhesive.

The butadiene-acrylonitrile oligomer can have an acrylonitrile content of from 5 percent to 60 percent, 10 percent to 50 percent, 15 percent to 45 percent, or in some embodiments, less than, equal to, or greater than 5 percent, 10, 15, 20, 25, 30, 35, 40, 45, 50, 55, or 60 percent by weight, based on the overall weight of the butadiene-acrylonitrile oligomer.

The adduct of diglycidyl ether of bisphenol A and butadiene-acrylonitrile oligomer can have a viscosity of from 50,000 cps to 1,000,000 cps at ambient temperature. Viscosity can be measured, for example, by a Brookfield LV-series viscometer provided by Brookfield AMETEK, Middleboro, MA.

Other epoxide-compatible toughening agents include acrylate core shell graft copolymers wherein the core or backbone is a polyacrylate polymer having a glass transition temperature (T_{g}) below about 0°C, such as polybutadiene, polybutyl acrylate or polyisooctyl acrylate to which is grafted a polymethacrylate polymer having a T_{g} above about 25°C, such as polymethylmethacrylate. Optionally, the core shell graft copolymer can be pre-dispersed in diglycidyl ether of bisphenol A. These are other useful tougheners are described in European Patent No. EP 0 623 151 (Tarbutton, et al.).

The epoxy resin or resins can represent any suitable proportion of the two-part curable adhesive. Excluding the first oligomeric toughener, the weight of the aforementioned epoxy resin(s) can be from 30 percent to 80 percent, from 40 percent to 80 percent, from 50 percent to 70 percent, or in some embodiments, less than, equal to, or greater than 30 percent, 40, 50, 60, 70, or 80 percent of the overall weight of the base and curative parts.

The first oligomeric toughener is preferably present in an amount that enhances peel performance of the cured adhesive over a wide range of temperatures, while maintaining solubility of the toughener in the epoxy resin(s). The weight of the first oligomeric toughener can be from 3 percent to 30 percent, from 5 percent to 30 percent, from 5 percent to 20 percent, or in some embodiments, less than, equal to, or greater than 3 percent, 5, 10, 20, 30, or 40 percent of the overall weight of the base and curative parts.

### Curative part

As mentioned previously, the curative part of the two-part curable adhesive is manually or automatically mixed with the base part to obtain a cured adhesive.

In the provided adhesives, the curative part includes a curative that is reactive with the epoxy resin. The curative part further includes a second oligomeric toughener that is different from the first oligomeric toughener. Preferably, the curative is reactive with the epoxy resin at ambient temperature to provide a cured adhesive within a reasonable working time for the bonding application at hand.

Known curatives that may be used in the present adhesive include any of a variety of aliphatic and aromatic amines. The amines preferably include primary and/or secondary amine groups. The curative can have an amine equivalent weight of up to 350 g/mol, up to 300 g/mol, up to 250 g/mol, or up to 200 g/mol.

Exemplary amine curatives include 4,7,10-trioxytridecane-1,13-diamine, 4-7-dioxydecane-1,10-diamine, diethylene triamine, triethylene tetraamine, tetraethylene pentamine, higher polyalkylene polyamines, aminoethyl piperazine, TCD diamine, bis(aminopropyl)piperazine, norbornane diamine, methylene dicyclohexylamines, methyl or dimethyl methylene dicyclohexylamines, isophorone amines or diamines, and polyamide amine. Blends of one or more of the above are also possible.

The curative or curatives can be from 20 percent to 70 percent, 25 percent to 60 percent, 40 percent to 60 percent, or in some embodiments, less than, equal to, or greater than 20 percent, 25, 30, 40, 50, 60, or 70 percent of the overall weight of the two-part curable composition when mixed.

Additional curatives, curing catalysts or accelerators may also be present in the curative part of the two-part curable adhesive. These can include, for example, tertiary amine catalysts and calcium catalysts to accelerate curing time. Tertiary amine catalysts include, for example, tris-2,4,6-dimethylaminomethyl phenol, described in U.S. Patent Nos. 4,518,749 (Waddili), 4,800,222 (Waddili), and 6,773,754 (Whiter) and available under the trade designation ANCAMINE by Evonik Industries AG, Essen, Germany. Useful calcium catalysts, including calcium nitrate tetrahydrate, are available from sources such as MilliporeSigma, St. Louis, MO. Curing accelerators can be incorporated into either the base or curative part to reduce curing time.

The second oligomeric toughener can be directly reactive with the epoxy resin in the base part of the two-part curable adhesive. The second oligomeric toughener comprises polytetrahydrofuranamine, and in particular any of the polytetrahydrofuranamines useful in making the adducts described in the previous subsection.

Alternatively, the second oligomeric toughener can be reactive with at least one curative to obtain a precursor, such as a curative adduct, that is reactive with the epoxy resin. An exemplary curative adduct is an amine-terminated butadiene-acrylonitrile oligomer derived from any of the butadiene-acrylonitrile oligomers previously described.

Like the first oligomeric toughener, the second oligomeric toughener can have any suitable molecular weight. The second oligomeric toughener can have a number average molecular weight of from 500 g/mol to 15,000 g/mol; from 1000 g/mol to 10,000 g/mol; from 1500 g/mol to 10,000 g/mol; or in some embodiments, less than, equal to, or greater than 500 g/mol; 600; 700; 800; 900; 1000; 1200; 1500; 1700; 2000; 2500; 3000; 3500; 4000; 4500; 5000; 6000; 7000; 8000; 9000; 10,000; 11,000; 12,000; 13,000; 14,000; or 15,000 g/mol.

The second oligomeric toughener is preferably present in an amount that enhances peel performance over a wide range of temperatures, while maintaining solubility of the toughener in the curative components. The weight of the second oligomeric toughener can be from 0.5 percent to 25 percent, from 2 percent to 25 percent, from 5 percent to 20 percent, or in some embodiment, less than, equal to, or greater than 0.5 percent, 2, 5, 10, 20, or 25 percent of the overall weight of the base and curative parts when mixed.

Relative to each other, the first and second oligomeric tougheners can be present in a weight ratio of from 0.2:1 to 5:1, from 0.4:1 to 4:1, from 0.6:1 to 3:1, or in some embodiments less than, equal to, or greater than 0.2:1, 0.3:1, 0.4:1, 0.5:1 0.7:1, 1:1, 3:2, 2:1, 3:1. 4:1, or 5:1, in the overall weight of the base and curative parts when mixed.

Either of the base part or curative part can further contain any number of other optional additives. Additional optional additives include, for example, adhesion promoters, fillers, rheology modifiers, pigments, additional rubbers, diluents (which may or may not be reactive), plasticizers, extenders, fire-retarding agents, thixotropic agents, flow control agents, thickeners, gelling agents, fillers, dyes, and antioxidants.

Regarding the fillers mentioned above, the provided two-part curable compositions can contain any of a variety of inorganic sub-micrometer particles known in the art. Inorganic sub-micrometer particles can include, for example, inorganic nanoparticles. Such particles may be present in the base part, curative part, or both.

Exemplary additives may include one or more of silica gels, calcium silicates, phosphates, molybdates, fumed silica, carbon black, clays such as bentonite, organoclays, aluminum-trihydrates, hollow-glass-microspheres; hollow-polymeric microspheres and calcium carbonate. In some embodiments, these fillers can be used to adjust modulus, promote adhesion, improve corrosion resistance, control the rheological properties of the adhesive, and/or reduce shrinkage during curing.

Exemplary commercial fillers include SHIELDEX AC5 (a synthetic amorphous silica, calcium hydroxide mixture available from W.R. Grace in Columbia, MD); CAB-O-SIL TS 720 (a hydrophobic fumed silica-treated with polydimethyl-siloxane polymer available from Cabot Corporation, Boston, MA); AEROSIL VP-R-2935 (a hydrophobically fumed silica available from Evonik Industries AG, Essen, Germany); glass beads class IV (250-300 micrometers): Micro-billes de verre 180/300 (available from CVP S.A. in France); glass bubbles K37; amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxy silane functionalized (2 wt%) aluminum trihydrate available from Nabaltec GmbH in Schwandorf, Germany).

Inclusion of small amounts of inorganic sub-micrometer particles can provide a significant increase of modulus in the cured composition. Advantageously, this increase in modulus can partially or fully offset the decrease in modulus attributable to the presence of core shell particles in the curable composition (if any) while preserving the high degree of fracture toughness imparted by the core shell particles. Useful sub-micrometer particles can include surface-bonded organic groups that serve to improve compatibility between the inorganic sub-micrometer particles and the epoxy resin.

Useful sub-micrometer particles include sub-micrometer particles derived from silicon dioxide (i.e., silica) and calcium carbonate.

### Methods of use

The provided adhesives are cured by mixing the first and second parts of the two-part curable adhesive to provide a mixture, disposing the mixture onto one or more substrates to be bonded, and then securing the substrate(s) until such time that the mixture has functionally cured. The mixture is typically dispensed onto bonding surfaces in a bead or layer.

If desired, these two-part adhesives can be enclosed in a dual-chambered cartridge and conveniently metered, mixed, and dispensed using any of a number of suitable applicator systems known to those of skill in the art, such as the 3M EPX Applicator System provided by 3M Company, St. Paul, MN. In larger scale operations, the reactive parts can be provided in bulk quantities and pumped from a drum or other storage container into an inline mixer and dispenser, which are located at the point of use. By mixing the adhesive at the point of use, such applicators can help reduce waste.

In some instances, the cured adhesive may be bonded to only a single structure or substrate, as might be the case when it is used as an isolator, void-filler, or potting compound.

When mixed, the first and second oligomeric tougheners form a multiplicity of heterogeneous domains within the mixture. The individual heterogeneous domains are too small to be visible with the naked eye, thereby preserving homogeneous adhesive properties on a macroscopic scale. Further, the relatively fast buildup of viscosity during the curing process prevents macroscopic phase separation of the first and second oligomeric tougheners.

In general, the two-part curable adhesive functionally cures within 10 hours of mixing at ambient temperature. In some embodiments, the two-part curable adhesive reaches a functional cure within 9 hours, 8, 7, 6, 5, 4, 3, or 2 hours of mixing.

While not required, curing can be accelerated by heating the mixed composition to elevated temperatures. The gelation time, or time at which the adhesive reaches a functionally cured state, can be from 0.25 hours to 8 hours, 0.5 hours to 6 hours, 1 hour to 4 hours, or in some embodiments, less than, equal to, or greater than 0.25 hours, 0.5, 0.75, 1, 1.5, 2, 2.5, 3, 3.5, 4, 4.6, 5, 6.5, 7, 7.5, or 8 hours.

While the first and second oligomeric tougheners are preferably fully soluble in their respective parts of the two-part curable adhesive, the first and second oligomeric tougheners are immiscible with each other at ambient temperatures.

In some embodiments, the first oligomeric toughener comprises an epoxy-terminated butadiene-acrylonitrile oligomer and the second oligomeric toughener comprises polytetrahydrofuranamine, where the epoxy-terminated butadiene-acrylonitrile oligomer is miscible with the epoxy resin at ambient conditions and the polyetheramine is miscible with the curative at ambient conditions.

Once cured, the adhesive mixture can provide degrees of bond strength and bond reliability sufficient for structural adhesive applications at temperatures of interest. This can be manifested by an average floating roller peel performance of from 10 N/25 mm to 450 N/25 mm at ambient temperature and an average overlap shear strength of from 3 MPa to 25 MPa at 150°C, an average floating roller peel performance of from 50 N/25 mm to 350 N/25 mm at ambient temperature and an average overlap shear strength of from 5 MPa to 20 MPa at 150°C, or an average floating roller peel performance of from 75 N/25 mm to 300 N/25 mm at ambient temperature and an average overlap shear strength of from 5 MPa to 15 MPa at 150°C.

Unexpectedly higher overlap shear strength at high temperatures along with high peel performance can be attributable to the immiscibility of the toughening oligomers in two adhesive parts. After the base and curative parts are mixed and curing process initiated, this miscibility can advantageously trigger (or accelerate) phase domain separation of the first and second oligomeric tougheners from the surrounding curable matrix resins. A further advantage of using two mutually immiscible tougheners is that it enables use of tougheners having lower molecular weight than otherwise possible, which in turn improves processability. This effect derives from the inverse relationship between the molecular weight of a toughener and its compatibility with the matrix.

### EXAMPLES

Objects and advantages of this disclosure are further illustrated by the following non-limiting examples, but the particular materials and amounts thereof recited in these examples, as well as other conditions and details, should not be construed to unduly limit this disclosure. Unless otherwise noted, all parts, percentages, ratios, etc. in the Examples and the rest of the specification are by weight.

**Table 1: Materials**

| **Designation** | **Description** | **Source** |
|---|---|---|
| BAPP | 1,4-bis(3-aminopropyl)piperazine | MilliporeSigma, St. Louis, MO, United States |
| ImerSeal 75, CaCO₃ | Calcium carbonate, a stearate-treated, beneficiated, wet ground marble, having a mean particle size of 1.6 micrometers. | Fitz Chem LLC, Itasca, IL, United States |
| Ca(NO₃)₂·4H₂O | Calcium nitrate tetrahydrate | MilliporeSigma |
| E757 | 1,4-cyclohexandimethanoldiglycidylether, available under the trade designation EPODIL 757 | Evonik Industries AG, Essen, Germany |
| EPON 828 | A diglycidyl ether of bisphenol A having an approximate epoxy equivalent weight of 187.5, available under the trade designation EPON Resin 828 | Hexion Specialty Chemicals, Rosbach, Germany |
| K54 | Tris(dimethylaminomethyl) phenol curing agent, available under the trade designation ANCAMINE K54 | Evonik Industries AG |
| MX257 | Diglycidyl ether of bisphenol A epoxy resin containing 37.5 wt. % butadiene-acrylic copolymer core shell rubber having an approximate epoxy equivalent weight of 294 grams/equivalent, available under the trade designation KANE ACE MX 257 | Kaneka Texas Corporation, Pasadena, TX, United States |
| MY721 | Tetrafunctional epoxy resin, available under the trade designation ARALDITE MY-721 | Huntsman Advanced Chemicals, Woodlands, TX, United States |
| NAEP | N-aminoethylpiperazine | MilliporeSigma |
| NBDA | Norbornane diamine, available under the designation PRO-NBDA | Mitsui Fine Chemicals Inc., Tokyo, Japan |
| RA840 | An adduct of the diglycidyl ether of bisphenol A and a butadiene-acrylonitrile elastomer, available under the trade designation HYPOX RA840 | CVC Thermoset Specialties, Moorestown, NJ, United States |
| TEPA, DEH 26 | Tetraethylenepentamine | Olin Corporation, Clayton, MO |
| THF1700 | Polytetrahydrofuranamine 1700, an amine of approximately 1700 average molecular weight, based on a PTMEG [poly(tetramethylene ether glycol)]. It contains a significant amount of secondary amine as well as primary amine., available under the trade designation POLYTHF AMINE 1700 | BASF SE, Ludwigshafen, Germany |
| TS720 | Synthetic, hydrophobic, amorphous silica, available under the trade designation CAB-O-SIL TS-720 | Cabot Corporation, Boston, MA. United States |
| Z6040 | 3-glycidoxypropyltrimethoxysilane, available under the trade designation DOWSIL Z-6040 SILANE | Dow Chemical Co., Midland, MI, United States |

### Test Methods:

Grade 2024-T3 bare aluminum panels were obtained from Erickson Metals of Minnesota, Inc., Coon Rapids, Minnesota. Prior to bonding with structural adhesive, the panels were subjected to the following panel preparation process.

### Panel Preparation

A bare aluminum panel was soaked in OAKITE 165 (BASF Corporation) caustic wash solution for ten minutes at 85°C (185°F). The panel was then immersed in tap water for ten minutes at 21°C (69.8°F), followed by a continuous spray rinsing with tap water for approximately three minutes. The panel was then immersed in a Forest Products Laboratory (FPL) etch solution for ten minutes at 66°C (151°F), after which the panel was spray rinsed with water for approximately three minutes at 21°C 69.8°F), allowed to drip dry for another ten minutes, then dried in an oven for thirty minutes at 54°C. The etched panel was ready to bond with adhesive and it should be used within 8-12 hours.

### Overlap Shear (OLS) Testing for Adhesive Film

FPL etched panels of 2024-T3 bare aluminum measuring 10.16 cm x 17.78 cm x 0.16 cm (4 inches long x 7.0 inches x 0.063 inches) were prepared for testing as described above under "Panel Preparation". The etched panels were bonded to one another in an overlapping relationship along their lengthwise dimension. Adhesive of the Example was applied onto the end of an etched aluminum panel measuring 4 inches x 7 inches x 0.063 inches (10.16 cm x 17.78 cm x 0.16 cm). A second equally sized etched aluminum panel was then applied over the adhesive at an overlap of 0.5 inches (12.7 mm), and the assembly pressed between metal blocks at an approximate pressure of 2-5 psi (13.8 - 34.5 KPa). The panel assembly was cured at 70 °F (21.1°C) for 72 hours, then cut into 1-inch by 7-inch (2.54 cm by 17.78 cm) strips. Overlap shear strength was measured according to ASTM D-1002, by means of a model "SINTECH-30" tensile tester, obtained from MTS Corporation, Eden Prairie, Minnesota, at a grip separation rate of 0.05 inches/minute (1.3 mm/min). Six test panels were prepared and evaluated per each example.

### Floating Roller Peel (FRP) Strength Test for Adhesive Film

Etched panels of 2024-T3 bare aluminum measuring 20.3 cm x 7.6cm x 0.16 cm (8.0 inches x 3.0 inches x 0.063 inches), and 25.4 cm x 7.6 cm x 0.064 cm (10 inches x 3 inches x 0.025 inch), were prepared for testing as described above under "Panel Preparation". An adhesive corresponding to the example or comparative example was applied onto etched panels of 2024-T3 bare aluminum measuring 20.3 cm x 7.6 cm x 0.16 cm. Primed 25.4 cm x 7.6 cm x 0.064 aluminum panel was then applied over a 20.3 cm x 7.6 cm x 0.16 cm panel on which the adhesive was already applied. The assembly was then pressed between metal blocks at an approximate pressure of 2-5 psi (13.8 - 34.5 KPa). The panel assembly was cured at ambient temperature for 72 hours, then evaluated for floating roller peel strength in accordance with ASTM D-3167-76 with the following modification. 5 samples were tested for each example or comparative example and the average value (in N/25 mm) was reported. Test strips measuring 1.27 cm (0.5 inches) wide were cut along the lengthwise direction of the bonded aluminum panels. The test was conducted at a rate of 30.5 cm/minute (6 inches/minute) at ambient temperature. In each test, the thinner substrate was peeled from the thicker one, and the results normalized to a width of 25 mm (approximately 1 inch).

### Examples 1 - 6 (EX1 - EX6):

### Preparation of Part A

Step 1: Predefined quantities (in grams) of EPON 828, MX 257, MY 721, and/or RA 840 were added to predefined quantities (in grams) of TEPA, BAPP, and/or N-AEP, as represented in Table 2. The components were then mixed thoroughly using a SPEEDMIXER DAC 400 FVZ high-speed shear mixer from Flack Tek, Inc. of Landrum, SC, United States at 2200 rpm for two to five minutes. The mixture was heated to 80°C under agitation and hold for 60 mins. The mixture was cooled to ambient temperature.

Step 2: Predefined quantities (in grams) of Ca(NO₃)₂·4H₂O and K54, as represented in Table 2, were added to the mixture and mixed for three to five minutes at 2200 rpm. An oligomer toughener was added only if it contained an amine group such as THF 1700.

Step 3: Predefined quantities of TS720 (in grams), as represented in Table 2, were added and the mixture was mixed for four minutes at 2200 rpm. The walls of the mixing bowl were scraped to ensure uniform mixing.

Step 4: Predefined quantities of any remaining material (in grams) were added, and the mixture was again mixed for two to five minutes.

**Table 2: Part A Compositions (grams)**

| | **EX1** | **EX2** | **EX3** | **EX4** | **EX5** | **EX6** |
|---|---|---|---|---|---|---|
| TEPA | 45.0 | 45.0 | 50.0 | 45.0 | 45.0 | 45.0 |
| TTA | 0.0 | 0.0 | 0.0 | 0.0 | 0.0 | 0.0 |
| BAPP | 55.0 | 55.0 | 0.0 | 55.0 | 55.0 | 55.0 |
| NAEP | 0.0 | 0.0 | 50.0 | 0.0 | 0.0 | 0.0 |
| RA840 | 14.0 | 35.0 | 15.0 | 20.0 | 0.0 | 20.0 |
| MY721 | 5.0 | 0.0 | 0.0 | 0.0 | 0.0 | 0.0 |
| EPON 828 | 0.0 | 0.0 | 0.0 | 0.0 | 0.0 | 0.0 |
| MX257 | 5.0 | 18.0 | 15.0 | 20.0 | 40.0 | 20.0 |
| THF 1700 | 3.0 | 0.0 | 0.0 | 0.0 | 10.0 | 0.0 |
| K-54 | 2.5 | 1.5 | 1.5 | 1.5 | 1.5 | 1.5 |
| CaCO₃ | 0.0 | 0.0 | 0.0 | 0.0 | 10.0 | 0.0 |
| Ca(NO₃)₂ | 1.0 | 1.0 | 1.0 | 1.0 | 1.0 | 1.0 |
| TS720 | 2.1 | 3.1 | 3.1 | 3.1 | 3.1 | 3.1 |

### Preparation of Part B

Step 1: Predefined quantities (in grams) of EPON 828, MX 257, MY721 and other epoxy resins, as represented in Table 3, were mixed with a SPEEDMIXER DAC 400 FVZ high-speed shear mixer at 2200 rpm for two to five minutes until the components mixed thoroughly. An oligomer toughener was added to the mixture. If it contained an epoxy group, then the toughener was added into the mixture directly. If it contained an amine group such as THF1700, the mixture was heated to 80°C and sustained at that temperature for 60 minutes while being continuously mixed. The mixture was then cooled to ambient temperature.

Step 2: Predefined quantities of TS720 and the remaining materials (in grams), as represented in Table 3, were added and the mixture was mixed for four minutes at 2200 rpm. The walls of the mixing bowl were scraped to ensure uniform mixing.

**Table 3: Part B Compositions (grams)**

| | **EX1** | **EX2** | **EX3** | **EX4** | **EX5** | **EX6** |
|---|---|---|---|---|---|---|
| EPON 828 | 20.0 | 30.0 | 40.0 | 40.0 | 40.0 | 15.0 |
| MY721 | 190.0 | 190.0 | 190.0 | 190.0 | 190.0 | 190.0 |
| MX257 | 40.0 | 20.0 | 0.0 | 0.0 | 0.0 | 80.0 |
| E757 | 30.0 | 30.0 | 30.0 | 30.0 | 20.0 | 30.0 |
| RA840 | 0.0 | 0.0 | 0.0 | 0.0 | 20.0 | 0.0 |
| THF 1700 | 20.0 | 18.0 | 30.0 | 30.0 | 0.0 | 30.0 |
| Z6040 | 5.0 | 5.0 | 5.0 | 5.0 | 5.0 | 5.0 |
| TS720 | 3.0 | 3.0 | 2.0 | 2.0 | 2.0 | 2.0 |

### Mixing of Part A and Part B

Part A and Part B compositions were mixed together by weight ratios, as represented in Table 4, using a SPEEDMIXER DAC 400 FVZ high-speed shear mixer at 2200 rpm for 30 seconds to one minute until the components mixed thoroughly.

**Table 4: Part A and Part B Compositions (Weight Ratio)**

| | **EX1** | **EX2** | **EX3** | **EX4** | **EX5** | **EX6** |
|---|---|---|---|---|---|---|
| Part A | 3.0 | 2.0 | 3.0 | 2.5 | 2.0 | 2.0 |
| Part B | 1.0 | 1.0 | 1.0 | 1.0 | 1.0 | 1.0 |

### Testing

OLS and FRP testing were conducted at specific conditions. The conditions and the results of the testing are represented in Table 5.

### Comparative Example 1 (CE1)

A sample of LOCTITE EA 9394 AERO adhesive obtained from Henkel Corporation of Düsseldorf, Germany underwent OLS and FRP testing. Results are represented in Table 5.

**Table 5: Test Results**

| **Temperature** | **23°C** | **121°C** | **149°C** | **177°C** | **23°C** |
|---|---|---|---|---|---|
| | **OLS** | | | | **FRP** |
| | **MPa** | | | | **N/25 mm** |
| | **(psi)** | | | | **(Piw)** |
| EX1 | 28.88 (4125) | 13.01 (1858) | 11.26 (1608) | 6.97 (996) | 7.64 (42.9) |
| EX2 | 38.02 (5431) | 15.38 (2197) | 10.56 (1509) | 5.68 (811) | 9.43 (53) |
| EX3 | 32.03 (4576) | 13.01 (1858) | 11.56 (1651) | 6.68 (954) | 6.91 (38.8) |
| EX4 | 32.90 (4700) | 12.96 (1851) | 9.78 (1397) | 5.36 (765) | 9.17 (51.5) |
| EX5 | 33.75 (4822) | 17.51 (2502) | 9.24 (1320) | 5.78 (826) | 7.51 (42.2) |
| EX6 | 32.35 (4622) | 15.74 (2248) | 9.42 (1345) | 4.40 (628) | 12.34 (69.3) |
| CE1 | 34.24 (4891) | 16.10 (2300) | 11.48 (1640) | 7.90 (1128) | 2.67 (15) |

The preceding description, given in order to enable one of ordinary skill in the art to practice the claimed disclosure, is not to be construed as limiting the scope of the disclosure, which is defined by the claims.

## Claims

1. A two-part curable adhesive comprising:
a first part comprising an epoxy resin and a first oligomeric toughener, and
a second part comprising a curative that is reactive with the epoxy resin at ambient conditions and a second oligomeric toughener,
wherein the first oligomeric toughener comprises either an epoxy-terminated butadiene-acrylonitrile oligomer or a polyetheramine-epoxy adduct, the second oligomeric toughener comprises polytetrahydrofuranamine, and wherein the first and second oligomeric tougheners are immiscible with each other at ambient conditions, and further wherein the two-part curable adhesive cures at ambient temperature when the first part and second part are mixed with each other.

2. The two-part curable adhesive of claim 1, wherein the first oligomeric toughener is reactive with the epoxy resin to obtain an epoxy adduct.

3. The two-part curable adhesive of claim 1, wherein the first oligomeric toughener is reactive with the curative.

4. The two-part curable adhesive of claim 1, wherein the second oligomeric toughener is reactive with the epoxy resin.

5. The two-part curable adhesive of claim 1, wherein the second oligomeric toughener is reactive with the curative to form a curative adduct.

6. The two-part curable adhesive of claim 1, wherein either the first or the second oligomeric toughener comprises a polyetheramine, and optionally a branched polyetheramine.

7. The two-part curable adhesive of claim 6, wherein the first oligomeric toughener comprises a polyetheramine-epoxy adduct, and optionally a branched polyetheramine-epoxy adduct.

8. The two-part curable adhesive of claim 6, wherein the second oligomeric toughener comprises polytetrahydrofuranamine, and optionally a branched polytetrahydrofuranamine.

9. The two-part curable adhesive of claim 1, wherein either the first or the second oligomeric toughener comprises a butadiene-acrylonitrile oligomer.

10. The two-part curable adhesive of claim 9, wherein the first oligomeric toughener comprises an epoxy-terminated butadiene-acrylonitrile oligomer comprising an adduct of diglycidyl ether of bisphenol A and carboxylic acid terminated butadiene-acrylonitrile (CTBN) oligomer.

11. The two-part curable adhesive of claim 9, wherein the second oligomeric toughener comprises an amine-terminated butadiene-acrylonitrile oligomer.

12. The two-part curable adhesive of claim 1, wherein the first oligomeric toughener comprises an epoxy-terminated butadiene-acrylonitrile oligomer and the second oligomeric toughener comprises a polyetheramine, and wherein the epoxy-terminated butadiene-acrylonitrile oligomer is miscible with the epoxy resin at ambient conditions and the polyetheramine is miscible with the curative at ambient conditions.

13. A method of bonding comprising:
mixing the first and second parts of the two-part curable adhesive of claim 1 to provide a mixture, wherein the first and second oligomeric tougheners form a multiplicity of heterogeneous domains within the mixture;
disposing the mixture onto at least one substrate to be bonded; and
securing the at least one substrate until the two-part curable adhesive has functionally cured.

## Patentansprüche

1. Ein härtbarer Zweikomponentenkleber, umfassend:
eine erste Komponente, umfassend ein Epoxidharz und einen ersten oligomeren Zähigkeitsverbesserer, und
eine zweite Komponente, umfassend ein Härtungsmittel, das bei Umgebungsbedingungen mit dem Epoxidharz reagiert, und einen zweiten oligomeren Zähigkeitsverbesserer,
wobei der erste oligomere Zähigkeitsverbesserer entweder ein Butadien-Acrylnitriloligomer mit Epoxidendgruppen oder ein Polyetheramin-Epoxidaddukt umfasst, der zweite oligomere Zähigkeitsverbesserer Polytetrahydrofuranamin umfasst und wobei der erste und der zweite oligomere Zähigkeitsverbesserer bei Umgebungsbedingungen nicht miteinander vermischbar sind, und wobei ferner der härtbare Zweikomponentenkleber bei Umgebungstemperatur aushärtet, wenn die erste Komponente und die zweite Komponente miteinander gemischt werden.

2. Der härtbare Zweikomponentenkleber nach Anspruch 1, wobei der erste oligomere Zähigkeitsverbesserer mit dem Epoxidharz reagiert, um ein Epoxidaddukt zu erhalten.

3. Der härtbare Zweikomponentenklebernach Anspruch 1, wobei der erste oligomere Zähigkeitsverbesserer mit dem Härtungsmittel reagiert.

4. Der härtbare Zweikomponentenkleber nach Anspruch 1, wobei der zweite oligomere Zähigkeitsverbesserer mit dem Epoxidharz reagiert.

5. Der härtbare Zweikomponentenkleber nach Anspruch 1, wobei der zweite oligomere Zähigkeitsverbesserer mit dem Härtungsmittel reagiert, um ein Härtungsmitteladdukt auszubilden.

6. Der härtbare Zweikomponentenkleber nach Anspruch 1, wobei entweder der erste oder der zweite oligomere Zähigkeitsverbesserer ein Polyetheramin und gegebenenfalls ein verzweigtes Polyetheramin umfasst.

7. Der härtbare Zweikomponentenkleber nach Anspruch 6, wobei der erste oligomere Zähigkeitsverbesserer ein Polyetheramin-Epoxidaddukt und gegebenenfalls ein verzweigtes Polyetheramin-Epoxidaddukt umfasst.

8. Der härtbare Zweikomponentenkleber nach Anspruch 6, wobei der zweite oligomere Zähigkeitsverbesserer Polytetrahydrofuranamin und gegebenenfalls ein verzweigtes Polytetrahydrofuranamin umfasst.

9. Der härtbare Zweikomponentenkleber nach Anspruch 1, wobei entweder der erste oder der zweite oligomere Zähigkeitsverbesserer ein Butadien-Acrylnitriloligomer umfasst.

10. Der härtbare Zweikomponentenkleber nach Anspruch 9, wobei der erste oligomere Zähigkeitsverbesserer ein Butadien-Acrylnitriloligomer mit Epoxidendgruppen umfasst, umfassend ein Addukt von Diglycidylether von Bisphenol-A und Butadien-Acrylnitril(CTBN)-Oligomer mit Carbonsäureendgruppen.

11. Der härtbare Zweikomponentenkleber nach Anspruch 9, wobei der zweite oligomere Zähigkeitsverbesserer ein Butadien-Acrylnitriloligomer mit Aminendgruppen umfasst.

12. Der härtbare Zweikomponentenkleber nach Anspruch 1, wobei der erste oligomere Zähigkeitsverbesserer ein Butadien-Acrylnitriloligomer mit Epoxidendgruppen umfasst und der zweite oligomere Zähigkeitsverbesserer ein Polyetheramin umfasst, und wobei das Butadien-Acrylnitriloligomer mit Epoxidendgruppen bei Umgebungsbedingungen mit dem Epoxidharz vermischbar ist und das Polyetheramin bei Umgebungsbedingungen mit dem Härtungsmittel vermischbar ist.

13. Ein Verfahren zum Binden, umfassend:
Mischen der ersten und der zweiten Komponente des härtbaren Zweikom ponentenklebers nach Anspruch 1, um ein Gemisch bereitzustellen, wobei der erste und der zweite oligomere Zähigkeitsverbesserer eine Mehrzahl von heterogenen Domänen innerhalb des Gemischs ausbilden;
Aufbringen des Gemischs auf mindestens ein zu bindendes Substrat; und
Befestigen des mindestens einen Substrats, bis der härtbare Zweikomponentenkleber funktionsfähig gehärtet ist.

## Revendications

1. Adhésif durcissable en deux parties, comprenant :
une première partie comprenant une résine époxy et un premier durcisseur oligomérique ; et
une seconde partie comprenant un agent de durcissement qui est réactif avec la résine époxy dans des conditions ambiantes et un second durcisseur oligomérique,
dans lequel le premier durcisseur oligomérique comprend un oligomère butadiène-acrylonitrile à terminaison époxy ou un adduit polyétheramine-époxy, le second durcisseur oligomérique comprend de la polytétrahydrofuranamine, et dans lequel les premier et second durcisseurs oligomériques ne sont pas miscibles entre eux dans des conditions ambiantes, et en outre dans lequel l'adhésif durcissable en deux parties durcit à température ambiante lorsque la première partie et la seconde partie sont mélangées l'une à l'autre.

2. Adhésif durcissable en deux parties selon la revendication 1, dans lequel le premier durcisseur oligomérique est réactif avec la résine époxy pour obtenir un adduit époxy.

3. Adhésif durcissable en deux parties selon la revendication 1, dans lequel le premier durcisseur oligomérique est réactif avec l'agent de durcissement.

4. Adhésif durcissable en deux parties selon la revendication 1, dans lequel le second durcisseur oligomérique est réactif avec la résine époxy.

5. Adhésif durcissable en deux parties selon la revendication 1, dans lequel le second durcisseur oligomérique est réactif avec l'agent de durcissement pour former un adduit de durcissement.

6. Adhésif durcissable en deux parties selon la revendication 1, dans lequel le premier ou le second durcisseur oligomérique comprend une polyétheramine, et éventuellement une polyétheramine ramifiée.

7. Adhésif durcissable en deux parties selon la revendication 6, dans lequel le premier durcisseur oligomérique comprend un adduit polyétheramine-époxy, et éventuellement un adduit polyétheramine-époxy ramifiée.

8. Adhésif durcissable en deux parties selon la revendication 6, dans lequel le second durcisseur oligomérique comprend de la polytétrahydrofuranamine, et éventuellement une polytétrahydrofuranamine ramifiée.

9. Adhésif durcissable en deux parties selon la revendication 1, dans lequel le premier ou le second durcisseur oligomérique comprend un oligomère butadiène-acrylonitrile.

10. Adhésif durcissable en deux parties selon la revendication 9, dans lequel le premier durcisseur oligomérique comprend un oligomère de butadiène-acrylonitrile à terminaison époxy comprenant un adduit d'éther diglycidylique de bisphénol A et d'oligomère de butadiène-acrylonitrile à terminaison acide carboxylique (CTBN).

11. Adhésif durcissable en deux parties selon la revendication 9, dans lequel le second durcisseur oligomérique comprend un oligomère de butadiène-acrylonitrile à terminaison amine.

12. Adhésif durcissable en deux parties selon la revendication 1, dans lequel le premier durcisseur oligomérique comprend un oligomère butadiène-acrylonitrile à terminaison époxy et le second durcisseur oligomérique comprend une polyétheramine, et dans lequel l'oligomère butadiène-acrylonitrile à terminaison époxy est miscible avec la résine époxy dans des conditions ambiantes et la polyétheramine est miscible avec l'agent de durcissement dans des conditions ambiantes.

13. Procédé de collage comprenant :
le mélange des première et seconde partie de l'adhésif durcissable en deux parties selon la revendication 1 pour obtenir un mélange, dans lequel les premier et second durcisseurs oligomériques forment une multiplicité de domaines hétérogènes dans le mélange ;
le dépôt du mélange sur au moins un substrat à coller ; et
la fixation de l'au moins un substrat jusqu'à ce que l'adhésif durcissable en deux parties ait durci de manière fonctionnelle.
